# EUROPEAN PATENT APPLICATION

(11) **EP 4 385 617 A1**
(43) Date of publication of application: **19.06.2024**
(21) Application number: 22855881.3
(22) Date of filing: 09.08.2022
(51) Int. Cl.: B01J 19/18, B01F 23/40, B01F 25/10, B01F 27/74

(54) **FLUID CONTROL METHOD AND TAYLOR VORTEX REACTION DEVICE**

(30) Priority: 11.08.2021 JP 2021131157
(71) Applicant: National University Corporation Kobe University, Kobe-shi, Hyogo 657-8501 (JP); Tipton Corp., Nagoya-shi, Aichi 457-8566 (JP)
(72) Inventor: OHMURA, Naoto, Kobe-shi, Hyogo 657-8501 (JP); SHIMIZU, Keigo, Kobe-shi, Hyogo 657-8501 (JP); KOBAYASHI, Tomoyuki, Nagoya-shi, Aichi 457-8566 (JP); KATO, Kairi, Nagoya-shi, Aichi 457-8566 (JP)
(74) Representative: Müller-Boré & Partner Patentanwälte PartG mbB
(86) International application number: PCT/JP2022/030389
(87) International publication number: WO 2023/017819

(57) **Abstract**

A reaction of a fluid in a reaction chamber is satisfactorily performed.

A fluid control method includes: generating, in a reaction chamber (84) formed between an outer cylinder (61) and an inner cylinder (70) coaxially disposed in the outer cylinder (61), a reaction phase (30) having a ring shape and formed of a reaction target fluid (F1, F2) in which a Taylor vortex (V1) is generated, the reaction phases (30) arranged in an axis (R) direction, and an inhibiting phase (31) having a ring shape that is adjacent to the reaction phase (30) in the axis (R) direction and inhibits the reaction target fluid (F1, F2) in the reaction phase (30) from flowing out to an outside of the reaction phase (30).

## Description

### TECHNICAL FIELD

The present invention relates to a fluid control method and a Taylor vortex reactor.

### BACKGROUND ART

Patent Literature 1 discloses a Taylor vortex reactor including an outer cylinder and an inner cylinder that rotates in the outer cylinder, in which a reaction chamber (a gap space) is formed between the outer cylinder and the inner cylinder. When an unreacted fluid is supplied into the reaction chamber and the inner cylinder is rotated, a Taylor vortex is generated in the reaction chamber, and fluid mixing, dispersion, emulsification, crystallization, granulation, chemical reaction, and the like are performed by strong shearing and vortex motion of the Taylor vortex flow.

### CITATIONS LIST

### PATENT LITERATURE

Patent Literature 1: Japanese Patent No. 6257636

### SUMMARY OF INVENTION

### TECHNICAL PROBLEMS

For example, when the reaction chamber is filled with the unreacted fluid and the Taylor vortex reactor is operated, this fluid generates a Taylor vortex. Then, it is known that along with generation of the Taylor vortex, a bypass flow that flows in an axial direction of the reaction chamber while coming and going alternately between an inner peripheral surface of the outer cylinder and an outer peripheral surface of the inner cylinder is generated along a vortex outer edge portion of the Taylor vortex. If the unreacted fluid is carried on the bypass flow and flows in the axial direction, the fluid may flow out of the reaction chamber before the reaction is completed, or the reaction may be finished without being sufficiently mixed. Therefore, a technique for controlling the flow of an unreacted fluid in the reaction chamber has been desired. In addition, the gap between the outer cylinder and the inner cylinder in the reaction chamber of the Taylor vortex reactor needs to be dimensionally controlled with high accuracy. Therefore, for the outer cylinder, it is preferable to use a metal having high rigidity. However, in this case, it is not possible to visually confirm generation situations of the Taylor vortex flow in the reaction chamber, which is inconvenient. The Taylor vortex flow herein refers to a flow of a fluid that has generated the Taylor vortex. On the other hand, the Taylor vortex refers to a form itself of an annularly flowing vortex.

A first invention has been made to solve at least one of the problems described above, and an object of the first invention is to satisfactorily control the fluid in the reaction chamber.

A second invention has been made to solve at least one of the problems described above, and an object of the second invention is to satisfactorily grasp the generation situations of a reaction phase and a non-reaction phase.

### SOLUTIONS TO PROBLEMS

A fluid control method according to the first invention includes, generating:
in a reaction chamber formed between an outer cylinder and an inner cylinder coaxially disposed in the outer cylinder,
a reaction phase having a ring shape, formed of a reaction target fluid in which a Taylor vortex is generated, the reaction phases being arranged; and
an inhibiting phase having a ring shape that is adjacent to the reaction phase in the axial direction and inhibits the reaction target fluid in the reaction phase from flowing out to an outside of the reaction phase.

A Taylor vortex reactor according to the second invention includes:
an outer cylinder;
an inner cylinder that is coaxially disposed in the outer cylinder, is rotationally driven around an axis, and forms a reaction chamber between the inner cylinder and the outer cylinder;
a reaction target fluid supply device that supplies, to the reaction chamber, a reaction target fluid that generates a reaction phase;
a heterophasic fluid supply device that supplies, to the reaction chamber, a heterophasic fluid that generates a non-reaction phase different from the reaction phase; and
a detection device that detects whether the reaction phase having a ring shape and the non-reaction phase containing the heterophasic fluid and having a ring shape are generated adjacent to each other in the axial direction in the reaction chamber.

### ADVANTAGEOUS EFFECTS OF INVENTION

In the fluid control method according to the first invention, since the outflow of the reaction target fluid from the reaction phase can be inhibited by the inhibiting phase, the reaction target fluid can be confined in the reaction phase. This reduces unevenness in the reaction of the reaction target fluid in the reaction phase and improves reaction rate of the reaction target fluid. As a result, the reaction in the reaction phase is satisfactorily performed.

In the Taylor vortex reactor according to the second invention, the generation situations of the reaction phase and the non-reaction phase can be grasped by the detection device.

### BRIEF DESCRIPTION OF DRAWINGS

Fig. 1 is a longitudinal sectional view of a Taylor vortex reactor of Example 1 as viewed from a direction orthogonal to an axis.
Fig. 2 is a horizontal sectional view of the Taylor vortex reactor of Example 1 as viewed from an axial direction.
Fig. 3 is an enlarged longitudinal sectional view in which a part of a reaction chamber of the Taylor vortex reactor of Example 1 is enlarged.
Fig. 4 is an enlarged longitudinal sectional view in which a part of the reaction chamber of the Taylor vortex reactor of Example 1 is enlarged, and shows a state in which a reaction target fluid is caused to flow into the reaction chamber and a non-reaction target fluid is not caused to flow into the reaction chamber.
Fig. 5 is an image of the reaction chamber of the Taylor vortex reactor of Example 1 as viewed from the direction orthogonal to the axis.
Fig. 6 shows a state in which a plurality of bubbles is generated by reducing a flow rate of a non-reaction target fluid to the reaction chamber in the Taylor vortex reactor of Example 1.
Fig. 7 is a table showing results of determining clarity of a boundary between the reaction phase and the inhibiting phase in each case where peripheral velocities of the inner cylinder and flow rates of the reaction target fluid and the non-reaction target fluid to the reaction chamber were changed, in a case where water is used as the reaction target fluid and a gap width is 0.5 mm, in the Taylor vortex reactor of Example 1.
Fig. 8 is a table showing the results of determining the clarity of the boundary between the reaction phase and the inhibiting phase in each case where the peripheral velocities of the inner cylinder and the flow rates of the reaction target fluid and the non-reaction target fluid to the reaction chamber were changed, in a case where a liquid obtained by adding glycerin to water is used as the reaction target fluid and the gap width is 0.5 mm, in the Taylor vortex reactor of Example 1.
Fig. 9 is a table showing the results of determining the clarity of the boundary between the reaction phase and the inhibiting phase in each case where the peripheral velocities of the inner cylinder and the flow rates of the reaction target fluid and the non-reaction target fluid to the reaction chamber were changed, in a case where water is used as the reaction target fluid and the gap width is 1.5 mm, in the Taylor vortex reactor of Example 1.
Fig. 10 is a table showing the results of determining the clarity of the boundary between the reaction phase and the inhibiting phase in each case where the peripheral velocities of the inner cylinder and the flow rates of the reaction target fluid and the non-reaction target fluid to the reaction chamber were changed, in a case where the liquid obtained by adding glycerin to water is used as the reaction target fluid and the gap width is 1.5 mm, in the Taylor vortex reactor of Example 1.
Fig. 11 is a table showing the results of determining the clarity of the boundary between the reaction phase and the inhibiting phase in each case where the peripheral velocities of the inner cylinder and the flow rates of the reaction target fluid and the non-reaction target fluid to the reaction chamber were changed, in a case where water is used as the reaction target fluid and the gap width is 2.5 mm, in the Taylor vortex reactor of Example 1.
Fig. 12 is a table showing the results of determining the clarity of the boundary between the reaction phase and the inhibiting phase in each case where the peripheral velocities of the inner cylinder and the flow rates of the reaction target fluid and the non-reaction target fluid to the reaction chamber were changed, in a case where the liquid obtained by adding glycerin to water is used as the reaction target fluid and the gap width is 2.5 mm, in the Taylor vortex reactor of Example 1.
Fig. 13 is a table showing the results of determining the clarity of the boundary between the reaction phase and the inhibiting phase in each case where the peripheral velocities of the inner cylinder and a flow rate ratio were changed, in a case where water is used as the reaction target fluid and the gap width is 0.5 mm, in the Taylor vortex reactor of Example 1.
Fig. 14 is a horizontal sectional view of a Taylor vortex reactor of another example as viewed from the axial direction.
Fig. 15 is an enlarged longitudinal sectional view in which a part of the reaction chamber of the Taylor vortex reactor of another example is enlarged, and shows a state in which microbubble phases are generated at a position along the inner peripheral surface of the outer cylinder.
Fig. 16 is an enlarged longitudinal sectional view in which a part of the reaction chamber of the Taylor vortex reactor of another example is enlarged, and shows a state in which microbubble phases are generated at a position along an outer peripheral surface of the inner cylinder.
Fig. 17 is an enlarged longitudinal sectional view in which a part of the reaction chamber of the Taylor vortex reactor of another example is enlarged, and shows a state in which bubble phases are generated at a position along the inner peripheral surface of the outer cylinder and the outer peripheral surface of the inner cylinder.
Fig. 18 is an enlarged longitudinal sectional view of a main part of the Taylor vortex reactor of another example, and shows a state in which a detection device is provided on the outer peripheral surface of the outer cylinder and an outflow path.
Fig. 19 is a longitudinal sectional view of the Taylor vortex reactor of another example as viewed from the direction orthogonal to the axis.
Fig. 20 is an enlarged longitudinal sectional view of the main part of the Taylor vortex reactor of another example, and shows a state in which distal end portions of a pair of electrode rods of the detection device are in contact with one reaction phase.
Fig. 21 is an enlarged longitudinal sectional view of the main part of the Taylor vortex reactor of another example, and shows a state in which distal end portions of the pair of electrode rods of the detection device are in contact with the inhibiting phase.
Fig. 22 is an enlarged longitudinal sectional view of the main part of the Taylor vortex reactor of another example, and shows a state in which one distal end portion of the pair of electrode rods of the detection device is in contact with the inhibiting phase.

### DESCRIPTION OF EMBODIMENT

### <Example 1>

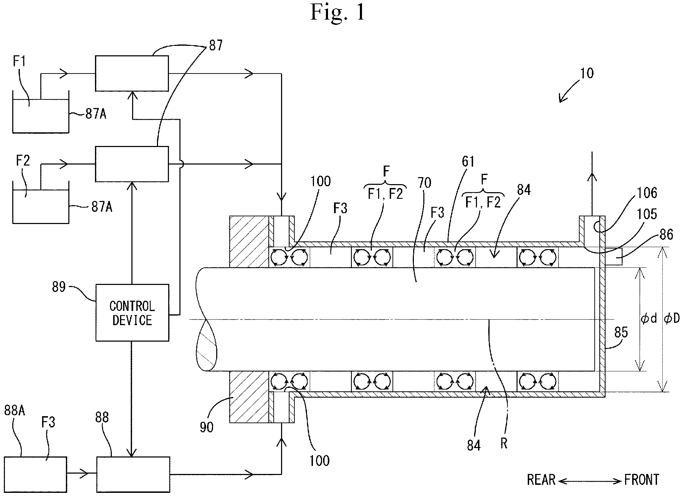

Hereinafter, Example 1 embodying the present invention and experimental results performed using a Taylor vortex reactor 10 of Example 1 will be described with reference to Figs. 1 to 13. In the following description, as to a front-rear direction, a right side in Fig. 1 is defined as a front, and a left side is defined as a rear.

### [Configuration of Taylor vortex reactor]

As shown in Fig. 1, the Taylor vortex reactor 10 of Example 1 includes an outer cylinder 61, an inner cylinder 70, a closing member 85, a detection device 86, a reaction target fluid supply device 87, a heterophasic fluid supply device 88, and a control device 89.

The outer cylinder 61 has a cylindrical shape, and is disposed in a state of being fixed with an axis R oriented in the front-rear direction (a horizontal direction). The inner peripheral surface of the outer cylinder 61 is circular when viewed from an axis R direction. The inner cylinder 70 has a columnar shape concentric with the outer cylinder 61. When viewed from the axis R direction, the outer peripheral surface of the inner cylinder 70 is circular. The inner cylinder 70 is coaxially disposed in the outer cylinder 61. A drive shaft of a motor not illustrated is connected to a rear end portion of the inner cylinder 70. By rotationally driving the motor, the inner cylinder 70 rotates around the axis R. A reaction chamber 84 in a cylindrical shape is formed between the outer peripheral surface of the inner cylinder 70 and the inner peripheral surface of the outer cylinder 61. The cylindrical shape is an annular shape in a cross-section cut at a right angle to the axis R.

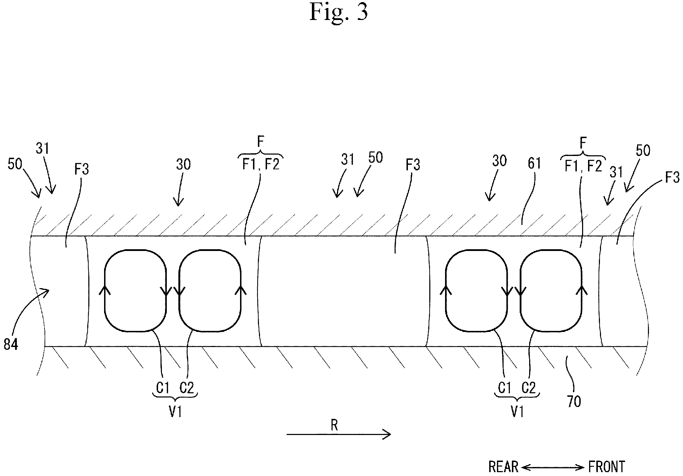

The closing member 85 is attached to a front end of the outer cylinder 61. The closing member 85 covers the reaction chamber 84 and the front end of the inner cylinder 70 from the front, and is disposed so as to face the front end surface of the inner cylinder 70 with a slight gap. The gap between the closing member 85 and the inner cylinder 70 communicates with the front end of the reaction chamber 84, but the gap hardly affects generation and movement of a Taylor vortex V1 (see Fig. 3) generated in the reaction chamber 84.

The detection device 86 is attached to the closing member 85. In the detection device 86, for example, a laser sensor, a capacitance sensor, an ultrasonic sensor, a density sensor that detects frequency characteristics of a fluid, or the like are used. The detection device 86 is attached to the closing member 85 at a position adjacent forward to the front end of the reaction chamber 84. The detection device 86 is located near an outlet 105 of the outer cylinder 61. The detection device 86 is configured to be able to output different detection values according to types of fluid located at the front end portion of the reaction chamber 84 (a terminal end portion of a moving path of a reaction phase 30 and an inhibiting phase 31 in the reaction chamber 84 which will be described later). That is, the detection device 86 can detect whether the fluid located at the front end portion of the reaction chamber 84 is the reaction phase 30 or the inhibiting phase 31 which is a non-reaction phase. In other words, the detection device 86 detects whether the reaction phase 30 and the inhibiting phase 31 containing a non-reaction target fluid F3 are generated adjacent to each other in the axis R direction in the reaction chamber 84.

The rear end of the outer cylinder 61 is attached to a rear portion closing member 90 having a plate thickness direction oriented in the front-rear direction. The rear portion closing member 90 is fixed to a fixing portion not illustrated. The motor that rotationally drives the inner cylinder 70 is fixed to the fixing portion, for example. The rear portion closing member 90 covers the rear end of the reaction chamber 84 from the rear. The inner cylinder 70 is inserted into a through hole formed by penetrating the rear portion closing member 90 in the plate thickness direction. A seal member not illustrated is provided between the rear portion closing member 90 and the outer peripheral surface of the inner cylinder 70. The seal member seals the gap between the rear portion closing member 90 and the inner cylinder 70 in an airtight or liquid-tight manner, and prevents the fluid in the reaction chamber 84 from leaking to the outside.

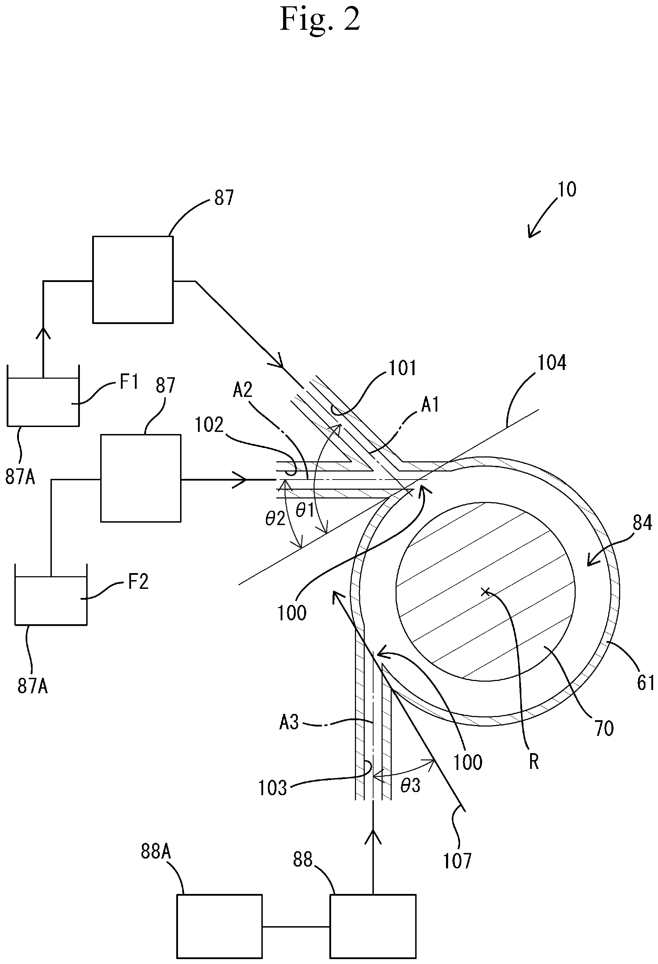

As shown in Fig. 2, two inlets 100, a first inflow path 101, a second inflow path 102, and a third inflow path 103 are formed at the rear end portion of the outer cylinder 61. In an axial sectional view viewed from the axis R direction of the inner cylinder 70, the two inlets 100 are arranged in a positional relationship shifted by 90° in a circumferential direction. The two inlets 100 are disposed at the same position in the axial direction (the front-rear direction) of the reaction chamber 84. The two inlets 100 are open at the rear end portion of the inner peripheral surface of the outer cylinder 61 and communicate with the rear end portion of the reaction chamber 84 (see Fig. 1).

As shown in Fig. 2, a downstream end of the first inflow path 101 and a downstream end of the second inflow path 102 communicate with one inlet 100 of the two inlets 100. In the axial sectional view viewed from the axis R direction, the first inflow path 101 and the second inflow path 102 linearly extend from the outside of the outer cylinder 61 toward the inlet 100 at different angles. When an angle formed by a center line A1 of the first inflow path 101 and a tangent 104 of the inner peripheral surface of the outer cylinder 61 at the inlet 100 is defined as θ1, and an angle formed by a center line A2 of the second inflow path 102 and the tangent 104 is defined as θ2, the angle θ1 and the angle θ2 are set to different angles. Neither an extension line of the center line A1 of the first inflow path 101 nor an extension line of the center line A2 of the second inflow path 102 intersects with the axis R. The center line A1 of the first inflow path 101 and the center line A2 of the second inflow path 102 intersect each other at a position outside the inner peripheral surface of the outer cylinder 61.

The downstream end of the third inflow path 103 communicates with the other inlet 100 of the two inlets 100. As viewed in the axial direction, the third inflow path 103 linearly extends from the outside of the outer cylinder 61 toward the inlet 100. A center line A3 of the third inflow path 103 and a tangent line 107 of the inner peripheral surface of the outer cylinder 61 at the inlet 100 are set to have an angle of θ3, for example. The center line A1 of the first inflow path 101, the center line A2 of the second inflow path 102, and the center line A3 of the third inflow path 103 are arranged on a common virtual two-dimensional plane orthogonal to the axis R of the inner cylinder 70.

As shown in Fig. 1, a front end portion of the outer cylinder 61 is formed with one outlet 105 for discharging the fluid in the reaction chamber 84 and an outflow path 106 communicating with the outlet 105. The outlet 105 is open to the inner peripheral surface of the outer cylinder 61 and communicates with the front end portion of the reaction chamber 84. The outflow path 106 linearly extends from the outlet 105 in the radial direction orthogonal to the axis R.

As shown in Fig. 2, one reaction target fluid supply device 87 is connected to an upstream side of each of the first inflow path 101 and the second inflow path 102. In the reaction target fluid supply device 87, for example, a tubing pump, a diaphragm pump, or the like are used. A reaction target fluid reservoir 87A is connected to each of the reaction target fluid supply devices 87. One reaction target fluid reservoir 87A stores a reaction target fluid F1, and the other reaction target fluid reservoir 87A stores a reaction target fluid F2. The reaction target fluids F1 and F2 are, for example, liquids. The reaction target fluids F1 and F2 may be of different types, or may be of the same type. In a case where the reaction target fluids F1 and F2 are different from each other, for example, specific gravity, viscosity, components, and the like are different. The reaction target fluid supply device 87 is driven. Then, the one reaction target fluid supply device 87 takes in the one reaction target fluid F1 from the reaction target fluid reservoir 87A and supplies the one reaction target fluid F1 into the reaction chamber 84 via the first inflow path 101. The other reaction target fluid supply device 87 takes in the other reaction target fluid F2 from the reaction target fluid reservoir 87A and supplies the reaction target fluid F2 into the reaction chamber 84 via the second inflow path 102. The center line A1 of the first inflow path 101 and the center line A2 of the second inflow path 102 intersect each other at a position outside the inner peripheral surface of the outer cylinder 61. Therefore, the reaction target fluids F1 and F2 merge at the upstream side of the one inlet 100.

The heterophasic fluid supply device 88 is connected to the upstream end of the third inflow path 103. In the heterophasic fluid supply device 88, for example, the tubing pump, the diaphragm pump, or the like is used. When the tubing pump is used, pulsation is less likely to occur during the inflow. The heterophasic fluid reservoir 88A is connected to the heterophasic fluid supply device 88. The non-reaction target fluid F3, which is a heterophasic fluid that generates the inhibiting phases 31, is stored in the heterophasic fluid reservoir 88A. The non-reaction target fluid F3 is, for example, a gas such as an inert gas or air, and is a fluid having incompatibility with the reaction target fluids F1 and F2 and having different properties. When the heterophasic fluid supply device 88 is driven, the heterophasic fluid supply device 88 takes in the non-reaction target fluid F3 from the heterophasic fluid reservoir 88A, and supplies the non-reaction target fluid F3 into the reaction chamber 84 via the third inflow path 103.

The control device 89 is, for example, a programmable logic controller (PLC) or a programmable controller (PC) mainly configured by a microcomputer. The control device 89 is configured to be able to control a supply operation of the reaction target fluids F1 and F2 in the reaction target fluid supply devices 87 to the reaction chamber 84, and the supply operation of the non-reaction target fluid F3 in the heterophasic fluid supply device 88 to the reaction chamber 84. For example, the control device 89 can adjust the flow rates of the reaction target fluids F1 and F2 and the non-reaction target fluid F3 to the reaction chamber 84 in a unit time by controlling the supply operations of the reaction target fluid supply devices 87 and the heterophasic fluid supply device 88.

### [Operation of Taylor vortex reactor]

To begin with, the motor is started in a state where the reaction chamber 84 is empty (that is, a state filled with air), and the inner cylinder 70 is rotationally driven at a predetermined rotation speed.

Next, the control device 89 starts the operations of the reaction target fluid supply devices 87 and the heterophasic fluid supply device 88, and supplies the reaction target fluids F1 and F2 and the non-reaction target fluid F3 into the reaction chamber 84. Hereinafter, the reaction target fluids F1 and F2 in a merged state are also referred to as a reaction target fluid F. For example, to begin with, the control device 89 starts the operation of the heterophasic fluid supply device 88, and continuously supplies the non-reaction target fluid F3 into the reaction chamber 84 from the other inlet 100 through the third inflow path 103. As a result, the air filled in the reaction chamber 84 is pushed out from the outlet 105 by the non-reaction target fluid F3. And, the reaction chamber 84 is filled with the non-reaction target fluid F3.

Next, the control device 89 starts the operation of the reaction target fluid supply devices 87, and continuously supplies reaction target fluid F into the reaction chamber 84 from the one inlet 100 through the first inflow path 101 and the second inflow path 102. As a result, as shown in Fig. 3, in the reaction chamber 84, a plurality of reaction phases 30 formed of the reaction target fluid F in which a Taylor vortex V1 is generated, and a plurality of inhibiting phases 31 which are non-reaction phases formed of the non-reaction target fluid F3 are generated to be alternately arranged in the axis R direction, and the reaction phases 30 and the inhibiting phases 31 integrally move forward in the axis R direction. At this time, the reaction phases 30 each have a ring shape around the axis R. The inhibiting phases 31 each have a ring shape around the axis R, too. The reaction phases 30 and the inhibiting phases 31 are alternately adjacent to each other in the axis R direction, and generate a flow (that is, a slag flow) moving forward in the axis R direction.

The slag flow referred to herein is a flow in which two kinds of fluids having no affinity, such as a gas and a liquid having no compatibility with each other, or aqueous liquid and an oily liquid having no compatibility with each other, integrally moves in one direction while maintaining a state of being alternately arranged.

The inhibiting phase 31 is generated by, for example, a gas. The inhibiting phase 31 is adjacent to the reaction phase 30 in the axis R direction. In one reaction phase 30, one Taylor vortex V1 is generated. One Taylor vortex V1 is constituted by a set of cells C1 and C2 formed of the reaction target fluid F flowing in opposite directions to each other. A plurality of Taylor vortices V1 may be generated in one reaction phase 30. In other words, a plurality of sets of cells C1 and C2 may be generated in one reaction phase 30. That is, when the inner cylinder 70 rotates around the axis R, the reaction phase 30 which is generated by the reaction target fluid F, in which the Taylor vortex V1 is generated, forming a ring shape around the axis R, and the inhibiting phase 31 which is generated by the non-reaction target fluid F3 forming a ring shape around the axis R, are generated in the cylindrical reaction chamber 84 formed between the outer cylinder 61 and the inner cylinder 70, so as to be adjacent to each other in the axis R direction.

In a cross-section including the axis R, the two cells C1 and C2 forming a pair in one reaction phase 30 are arranged side by side in the axis R direction. Here, the reaction target fluid F in one cell C1 has an annular shape (a spiral shape) and flows in a clockwise direction in Fig. 3.

The reaction target fluid F in the other cell C2 has the annular shape (the spiral shape) and flows in a counterclockwise direction in Fig. 3. That is, one Taylor vortex V1 constituted by a set of the reaction target fluids F flowing annularly through the above-described two paths. Hereinafter, the two cells C1 and C2 are also referred to as paired vortices C1 and C2.

In one reaction phase 30, various reactions such as mixing, stirring, dispersion, emulsification, crystallization, granulation, chemical reaction, pulverization, and micronization (hereinafter, also simply referred to as various reactions) of the reaction target fluids F1 and F2 are performed by a shear force of adjacent cells C1 and C2 of the Taylor vortex V1.

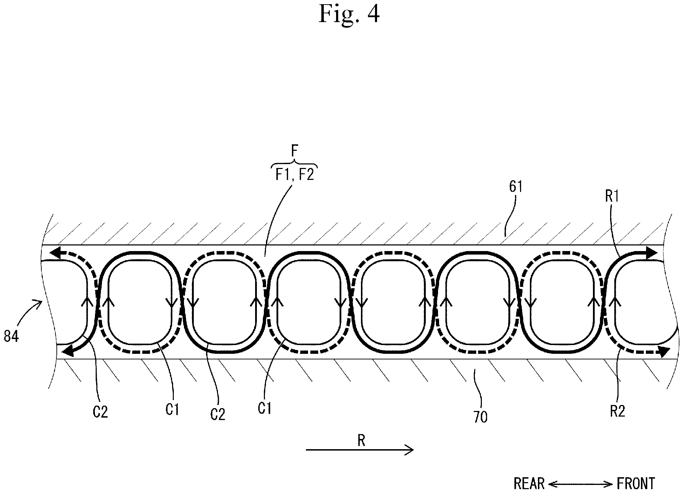

By the inhibiting phase 31, forward and backward movements of the reaction target fluid F between adjacent reaction phases 30 are inhibited. In other words, the inhibiting phase 31 is interposed between one paired vortices C1 and C2 and the other paired vortices C1 and C2, and inhibits the one paired vortices C1 and C2 and the other paired vortices C1 and C2 from being mixed. That is, diffusion of the reaction target fluid F from the reaction phase 30 in the axis R direction is inhibited by the inhibiting phase 31, and the inhibiting phase 31 is a partition phase 50 having an effect of partitioning two reaction phases 30 adjacent to each other in the axis R direction so as to be separated in the axis R direction. The partition phase 50 is made of, for example, a gas. Even when the bypass flows (a solid line R1 and a broken line R2 in Fig. 4) along the vortex outer edge portion of the cells C1 and C2 are generated in the one reaction phase 30, the extension of the bypass flows toward the other reaction phases 30 is blocked by the partition phase 50. Therefore, the fluid in the vortex outer edge portion is satisfactorily stirred with the fluid in one or more Taylor vortices V1 without flowing out from the one or more Taylor vortices V1, and the various reactions are satisfactorily performed. Therefore, in one reaction phase 30, the various reactions in the reaction target fluid F can be satisfactorily performed. In this way, the inhibiting phase 31 promotes favorable various reactions in the reaction phases 30.

The plurality of reaction phases 30 and the plurality of inhibiting phases 31 are alternately arranged in the axis R direction, and generate a gas-liquid slag flow moving forward in the axis R direction. The detection device 86 attached to the closing member 85 detects whether the fluid that has reached the closing member 85 is the reaction phase 30 or the inhibiting phase 31. The reaction phase 30 and the inhibiting phase 31 moving forward in the axis R direction flow out of the Taylor vortex reactor 10 through the outflow path 106 when reaching the outlet 105.

Since the inhibiting phase 31 made of gas and the reaction phase 30 made of liquid are in a relationship of having incompatibility with each other, separation of the reaction target fluid F and the non-reaction target fluid F3 can be easily performed. Therefore, it is possible to easily collect only the reaction target fluid F in which favorable various reactions have been completed. There is a possibility that various reactions have not been stably performed in the first several reaction phases 30 flowing out from the outflow path 106 to the outside. Therefore, the first several reaction phases 30 flowing out from the outflow path 106 to the outside may be discarded without being collected.

In contrast, in a case where no inhibiting phase 31 is generated, that is, in a case where the non-reaction target fluid F3 is not caused to flow into the reaction chamber 84, as shown in Fig. 4, a plurality of cells C1 and C2 are continuously generated in the axis R direction of the reaction chamber 84 by the reaction target fluids F. In this case, a part of the reaction target fluid F generates bypass flows R1 and R2 that move forward or move backward in the axis R direction as if threading between the cells C1 and C2 (see Fig. 4). Due to this, in the reaction chamber 84 not having the inhibiting phases 31, various reactions time may become longer or shorter, or the shear force may vary, and therefore, it is difficult to uniformly perform the various reactions in the reaction target fluids F.

### [Effect of bubbles of inhibiting diffusion in axial direction]

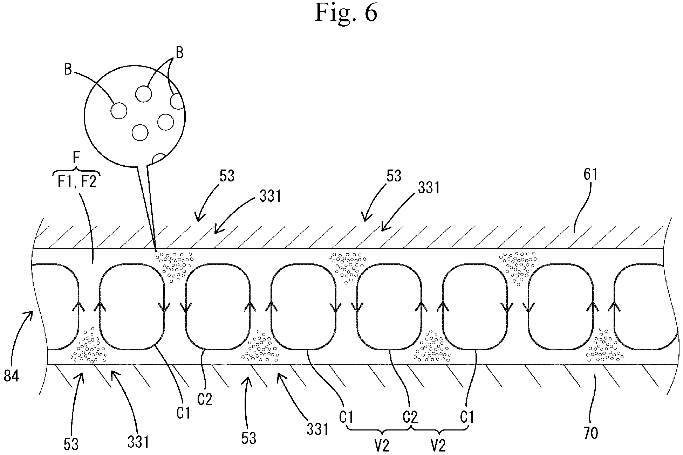

Meanwhile, when the flow rate of the non-reaction target fluid F3 to the reaction chamber 84 with respect to the reaction target fluids F1 and F2 is reduced, the non-reaction target fluid F3 tends to become bubbles B having a plurality of particles as shown in Fig. 6. The bubbles B are likely to become microbubbles.

The bubbles B thus formed are generated between adjacent cells C1 and C2 in a valley facing the inner peripheral surface of the outer cylinder 61 or the outer peripheral surface of the inner cylinder 70. The valley on an inner peripheral surface side of the outer cylinder 61 is a region surrounded by a portion, where flows of the outer peripheral portions of the adjacent cells C1 and C2 approach each other and the direction of the flows changes in the direction intersecting the axis R direction, and the inner peripheral surface of the outer cylinder 61 (hereinafter, also referred to as a valley region). The valley on an outer peripheral surface side of the inner cylinder 70 is a region surrounded by a portion, where the flows of the outer peripheral portions of the adjacent cells C1 and C2 approach each other and the direction of the flows changes in the direction intersecting the axis R direction, and the outer peripheral surface of the inner cylinder 70 (hereinafter, also referred to as the valley region). In the valley region (the valley between adjacent Taylor vortices V2), microbubble phases 53 containing the bubbles B (the microbubbles) are generated. In the valley region on the inner cylinder 70 side, the microbubble phases 53 are generated so as to be in contact with the outer peripheral surface of the inner cylinder 70, and in the valley region on the outer cylinder 61 side, the microbubble phases 53 are generated so as to be in contact with the inner peripheral surface of the outer cylinder 61.

The bubbles B included in the microbubble phase 53 generated in the valley region between the adjacent cells C1 and C2 move in the valley region as if they are confined in the valley region. The bubbles B exhibit a function of hindering (inhibiting) generation of the bypass flows (see Fig. 4) that move forward or move backward in the axis R direction. This makes it difficult for the reaction target fluid F to come and go between the adjacent cells C1 and C2, so that the various reactions in the reaction target fluid F can be satisfactorily performed in one cell C1 (C2). In other words, the microbubble phase 53 containing the bubbles B functions as an inhibiting phase 331 that inhibits the reaction target fluid F in one cell C1 (C2) from flowing out to the other cell C1 (C2). The reaction target fluid F in the cell C1 (C2) is inhibited from diffusing in the axis R direction by the microbubble phase 53.

### [Experiment on generation form of reaction phase and inhibiting phase]

Next, experiment results concerning generation forms of the reaction phase 30 and the inhibiting phase 31 in the Taylor vortex reactor 10 of Example 1 will be described. In the experiment, a generation state of the reaction phase 30 and the inhibiting phase 31 was confirmed by changing; a gap width G obtained by dividing a difference between an inner diameter D of the outer cylinder 61 and an outer diameter d of the inner cylinder 70 by 2, a flow rate ratio Q1/Q2, a total flow rate (a flow velocity of a fluid in the axis R direction (hereinafter, also simply referred to as an axial flow velocity Fv)) of the reaction target fluid F and the non-reaction target fluid F3 to the reaction chamber 84, a rotation speed of the inner cylinder 70 (a peripheral velocity V of the inner cylinder 70, hereinafter, also simply referred to as a peripheral velocity V), and viscosity of the reaction target fluid F. The outer cylinder 61 used in this experiment is only one type having the inner diameter D of 50 mm. The outer cylinder 61 is made of a transparent acrylic resin formed in the cylindrical shape. A dimension of the reaction chamber 84 in the front-rear direction is 158 mm.

Q1 is a flow rate of the non-reaction target fluid F3 caused to flow into the reaction chamber 84 in a unit time, Q2 is a flow rate of the reaction target fluid F caused to flow into the reaction chamber 84 in a unit time, and the unit thereof is mm³/s (mL/s). The axial flow velocity Fv (mm/s) is a value obtained by dividing a value obtained by adding Q1 and Q2 by a sectional area (mm²) of the reaction chamber 84. The sectional area (mm²) of the reaction chamber 84 is an area of a cross-section cut in a direction orthogonal to the axis R direction, and can be obtained by ((D/2)² - (d/2)²) × π.

The gap width G is a difference between a radius of an inner peripheral circle of the outer cylinder 61 and a radius of an outer peripheral circle of the inner cylinder 70. For example, in a case where the outer diameter d of the inner cylinder 70 is 47 mm and the inner diameter D of the outer cylinder 61 is 50 mm, the gap width G is (50 - 47)/2 = 1.5 mm. A diameter dimension ratio d/D between the inner diameter D of the outer cylinder 61 and the outer diameter d of the inner cylinder 70 is 47/50 = 0.94. That is, as the outer diameter d of the inner cylinder 70 decreases, a value of the diameter dimension ratio d/D decreases, and a value of the gap width G increases. In this experiment, three types of inner cylinders 70 having different outer diameters d (45 mm, 47 mm, and 49 mm) were prepared, and the gap width G (the diameter dimension ratio d/D) was changed by replacing the inner cylinder 70.

Specifically, in each of the three types of gap widths G of 2.5 mm (the outer diameter d of the inner cylinder 70 is 45 mm, and the diameter dimension ratio d/D is 0.9), 1.5 mm (the outer diameter d of the inner cylinder 70 is 47 mm, and the diameter dimension ratio d/D is 0.94), and 0.5 mm (the outer diameter d of the inner cylinder 70 is 49 mm, and the diameter dimension ratio d/D is 0.98), the rotation speed of the inner cylinder 70 was changed in 30 stages from 100 rpm to 3000 rpm, the total flow rate (Q1 + Q2) of the reaction target fluid F and the non-reaction target fluid F3 to the reaction chamber 84 was changed in 5 stages of 5 mL/min, 30 mL/min, 60 mL/min, 120 mL/min, and 180 mL/min, and further, the type of the reaction target fluid F was changed to water and to a liquid obtained by mixing 50 wt% of glycerin with water. Then, states of the reaction phase 30 and the inhibiting phase 31 generated in each combination were observed. The air was used as the non-reaction target fluid F3, and hereinafter, the air was used in all the experiments in the same manner.

In a case where the rotation speed of the inner cylinder 70 is constant, the peripheral velocity V of the outer peripheral surface of the inner cylinder 70 changes according to the outer diameter d of the inner cylinder 70. Therefore, in a case where the outer diameter d of the inner cylinder 70 is 45 mm, the peripheral velocity V changes in 30 stages between 0.2 m/s and 7.1 m/s. In a case where the outer diameter d of the inner cylinder 70 is 47 mm, the peripheral velocity V changes in 30 stages between 0.2 m/s and 7.4 m/s. In a case where the outer diameter d of the inner cylinder 70 is 49 mm, the peripheral velocity V changes in 30 stages between 0.3 m/s and 7.7 m/s.

The gap width G changes according to the outer diameter d of the inner cylinder 70. Therefore, in a case where the total flow rate (Q1 + Q2) of the reaction target fluid F and the non-reaction target fluid F3 to the reaction chamber 84 is constant, as the gap width G decreases, a volume of the reaction chamber 84 decreases, and accordingly, a band in which the axial flow velocity Fv fluctuates is displaced to a high speed side. Specifically, in a case where the gap width G is 2.5 mm, the axial flow velocity Fv changes in 5 stages between 0.2 mm/s and 8.0 mm/s. In a case where the gap width G is 1.5 mm, the axial flow velocity Fv changes in 5 stages between 0.4 mm/s and 13.1 mm/s. In a case where the gap width G is 0.5 mm, the axial flow velocity Fv changes in 5 stages between 1.1 mm/s and 38.5 mm/s.

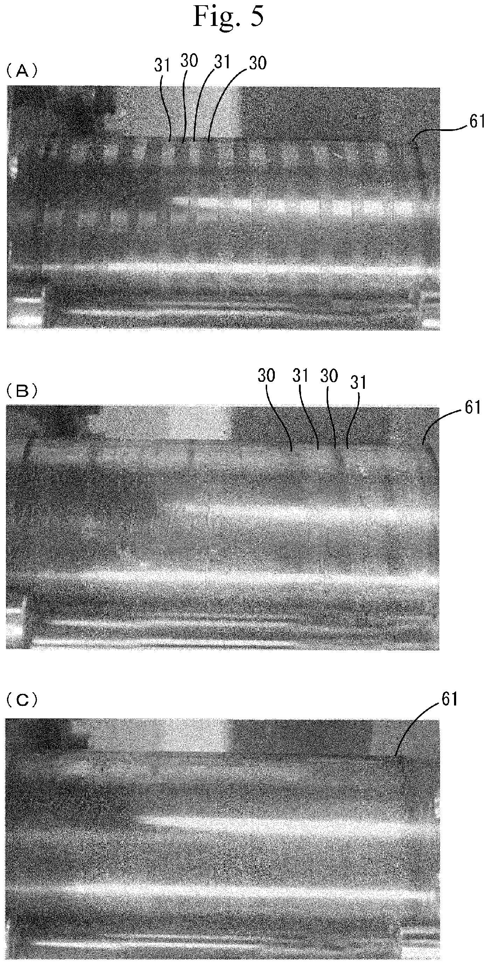

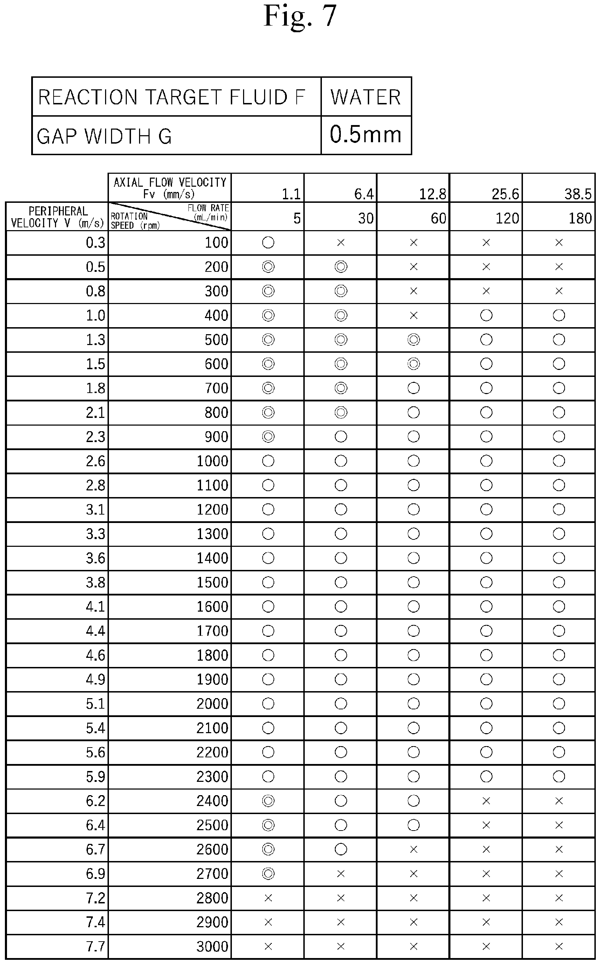

As shown in Figs. 7 to 13, in a case where the boundary between the reaction phase 30 and the inhibiting phase 31 clearly appeared and there was no adhesion of water droplets to a region where the inhibiting phase 31 was generated in the inner peripheral surface of the outer cylinder 61, it was determined as "@ (best)" (see Fig. 5(A)). In a case where the boundary between the reaction phase 30 and the inhibiting phase 31 clearly appeared and the adhesion of water droplets was observed in the region where the inhibiting phase 31 was generated in the inner peripheral surface of the outer cylinder 61, it was determined as "o (good)" (see Fig. 5(B)). In this case, since the generation of the bypass flows R1 and R2 as shown in Fig. 4 can be inhibited, it can be said that the diffusion of the reaction target fluid F in the axis R direction is inhibited as compared with the case where no inhibiting phase 31 is generated. In a case where the boundary between the reaction phase 30 and the inhibiting phase 31 did not appear clearly, it was determined as "× (poor)" (see Fig. 5(C)).

### [Results when gap width G is 0.5 mm]

Results when the reaction target fluid F is water and the gap width G is 0.5 mm (the outer diameter d of the inner cylinder 70 is 49 mm, and the diameter dimension ratio d/D is 0.98) will be described. The flow rate ratio Q1/Q2 was set to 1. As shown in Fig. 7, in a case where the peripheral velocity V was in a range of 0.5 m/s to 2.1 m/s and the axial flow velocity Fv was 1.1 mm/s or 6.4 mm/s, the determination was "⊚ (best)". In addition, in a case where the peripheral velocity V was 1.3 m/s or 1.5 m/s and the axial flow velocity Fv was 12.8 mm/s, the determination was "@ (best)". In addition, in a case where the peripheral velocity V was 2.3 m/s and the axial flow velocity Fv was 1.1 mm/s, the determination was "@ (best)". In addition, in a case where the peripheral velocity V was in a range of 6.2 m/s to 6.9 m/s and the axial flow velocity Fv was 1.1 mm/s, the determination was "⊚ (best)". Under these conditions, since no water droplets adhere to the inner peripheral surface of the outer cylinder 61 where the inhibiting phase 31 is located, the reaction phase 30 moves forward in the axis R direction without the reaction target fluid F diffusing in the axis R direction.

In a case where the peripheral velocity V was 0.3 m/s and the axial flow velocity Fv was 1.1 mm/s, the determination was "o (good)". In addition, in a case where the peripheral velocity V was in a range of 1.0 m/s to 1.5 m/s and the axial flow velocity Fv was 25.6 mm/s or 38.5 mm/s, the determination was "o (good)". In addition, in a case where the peripheral velocity V was 1.8 m/s or 2.1 m/s and the axial flow velocity Fv was in a range of 12.8 mm/s to 38.5 mm/s, the determination was "o (good)". In addition, in a case where the peripheral velocity V was 2.3 m/s and the axial flow velocity Fv was in a range of 6.4 mm/s to 38.5 mm/s, the determination was "o (good)". In addition, when the peripheral velocity V was in a range of 2.6 m/s to 5.9 m/s, the determination was "o (good)" regardless of a value of the axial flow velocity Fv. In addition, in a case where the peripheral velocity V was 6.2 m/s or 6.4 m/s and the axial flow velocity Fv was 6.4 mm/s or 12.8 mm/s, the determination was "o (good)". In addition, in a case where the peripheral velocity V was 6.7 m/s and the axial flow velocity Fv was 6.4 mm/s, the determination was "o (good)". Under these conditions, a part of the reaction target fluid F of the reaction phase 30 located on a front side in the axis R direction adheres to the inner peripheral surface of the outer cylinder 61 and is left, and the left reaction target fluid F is taken into the reaction phase 30 located on a rear side in the axis R direction. In other words, movement of the reaction target fluid F between the adjacent reaction phases 30 slightly occurs. In a case where the peripheral velocity V and the axial flow velocity Fv were a combination other than the above, the determination was "× (poor)".

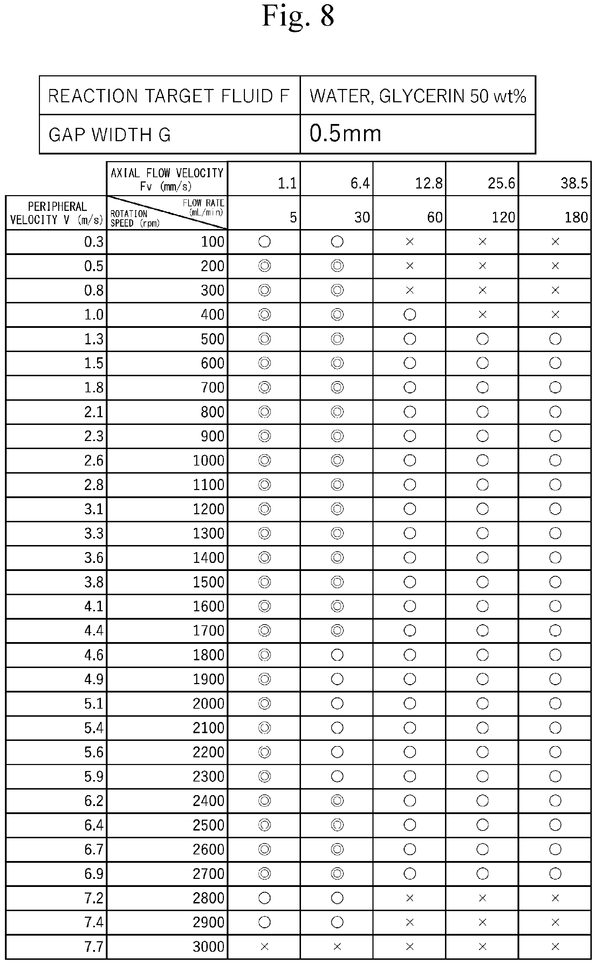

The results when the reaction target fluid F is the liquid obtained by mixing 50 wt% of glycerin with water and the gap width G is 0.5 mm (the outer diameter d of the inner cylinder 70 is 49 mm, and the diameter dimension ratio d/D is 0.98) will be described. The flow rate ratio Q1/Q2 was set to 1. As shown in Fig. 8, in a case where the peripheral velocity V was in a range of 0.5 m/s to 6.9 m/s and the axial flow velocity Fv was 1.1 mm/s, the determination was "@ (best)". In addition, in a case where the peripheral velocity V was in a range of 0.5 m/s to 4.4 mm/s and the axial flow velocity Fv was 6.4 mm/s, the determination was "⊚ (best)". In addition, in a case where the peripheral velocity V was in a range of 6.2 m/s to 6.9 m/s and the axial flow velocity Fv was 6.4 mm/s, the determination was "@ (best)".

In a case where the peripheral velocity V was 0.3 m/s and the axial flow velocity Fv was 1.1 mm/s or 6.4 mm/s, the determination was "o (good)". In addition, in a case where the peripheral velocity V was 1.0 m/s and the axial flow velocity Fv was 12.8 mm/s, the determination was "o (good)". In addition, in a case where the peripheral velocity V was in a range of 4.6 m/s to 5.9 m/s and the axial flow velocity Fv was 6.4 mm/s, the determination was "o (good)". In addition, in a case where the peripheral velocity V was 7.2 m/s or 7.4 m/s and the axial flow velocity Fv was 1.1 mm/s or 6.4 mm/s, the determination was "o (good)". In addition, in a case where the peripheral velocity V was in a range of 1.3 m/s to 6.9 m/s and the axial flow velocity Fv was in a range of 12.8 mm/s to 38.5 mm/s, the determination was "o (good)". In a case where the peripheral velocity V and the axial flow velocity Fv were a combination other than the above, the determination was "× (poor)".

### [Results when gap width G is 1.5 mm]

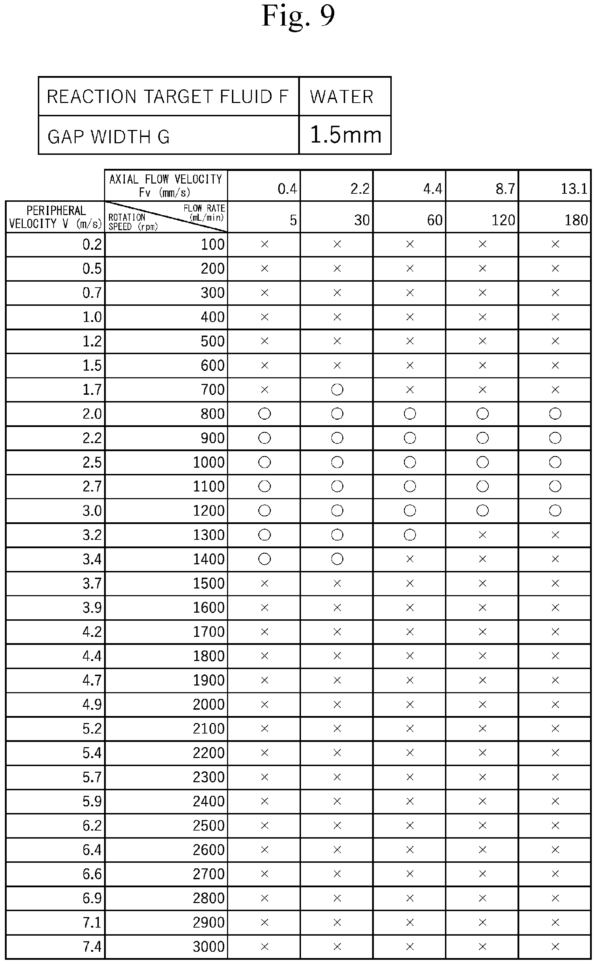

Results when the reaction target fluid F is water and the gap width G is 1.5 mm (the outer diameter d of the inner cylinder 70 is 47 mm, and the diameter dimension ratio d/D is 0.94) will be described. The flow rate ratio Q1/Q2 was set to 1. As shown in Fig. 9, in a case where the peripheral velocity V was 1.7 m/s and the axial flow velocity Fv was 2.2 mm/s, the determination was "o (good)". In addition, in a case where the peripheral velocity V was 2.0 m/s to 3.0 mm/s, the determination was "o (good)" regardless of speed of the axial flow velocity Fv. In addition, in a case where the peripheral velocity V was 3.2 m/s and the axial flow velocity Fv was in a range of 0.4 mm/s to 4.4 mm/s, the determination was "o (good)". In addition, in a case where the peripheral velocity V was 3.4 m/s and the axial flow velocity Fv was 0.4 mm/s or 2.2 mm/s, the determination was "o (good)". In a case where the peripheral velocity V and the axial flow velocity Fv were a combination other than the above, the determination was "× (poor)".

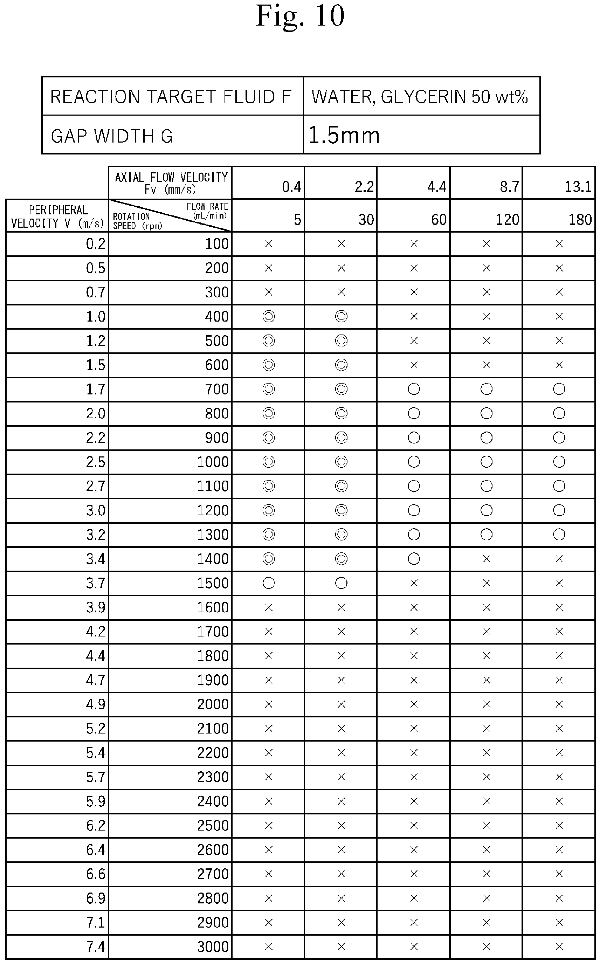

The results when the reaction target fluid F is the liquid obtained by mixing 50 wt% of glycerin with water and the gap width G is 1.5 mm (the outer diameter d of the inner cylinder 70 is 47 mm, and the diameter dimension ratio d/D is 0.94) will be described. The flow rate ratio Q1/Q2 was set to 1. As shown in Fig. 10, in a case where the peripheral velocity V was in a range of 1.0 m/s to 3.4 m/s and the axial flow velocity Fv was 0.4 mm/s or 2.2 mm/s, the determination was "⊚ (best)". In addition, in a case where the peripheral velocity V was in a range of 1.7 m/s to 3.2 m/s and the axial flow velocity Fv was in a range of 4.4 mm/s to 13.1 mm/s, the determination was "o (good)". In addition, in a case where the peripheral velocity V was 3.4 m/s and the axial flow velocity Fv was 4.4 mm/s, the determination was "o (good)". In addition, in a case where the peripheral velocity V was 3.7 m/s and the axial flow velocity Fv was 0.4 mm/s or 2.2 mm/s, the determination was "o (good)". In a case where the peripheral velocity V and the axial flow velocity Fv were a combination other than the above, the determination was "× (poor)".

### [Results when gap width G is 2.5 mm]

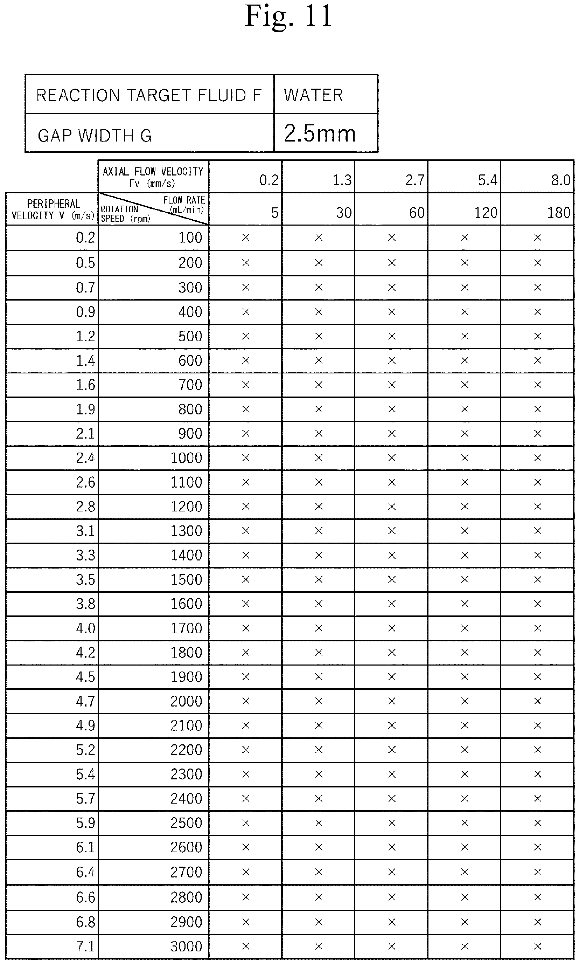

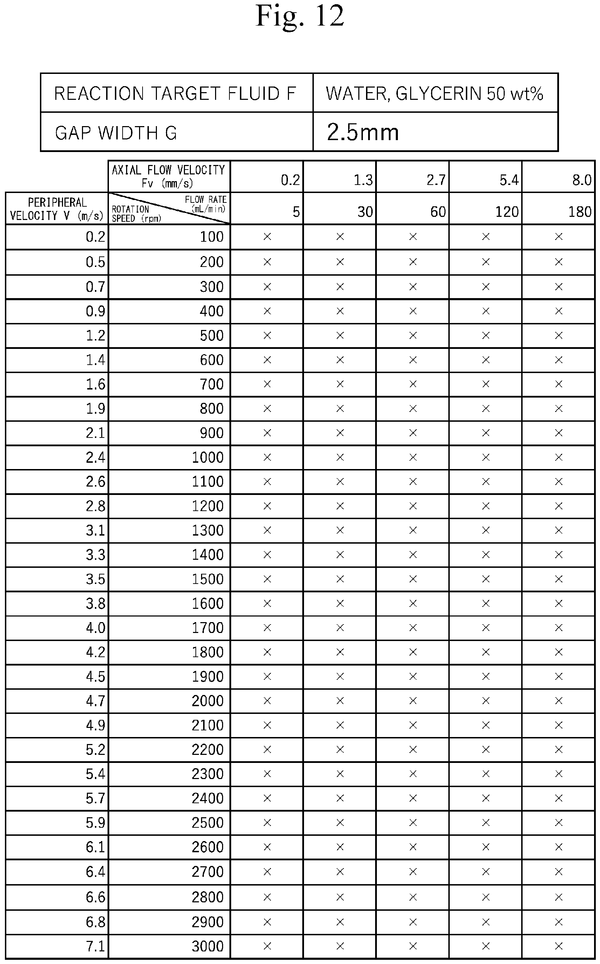

When the gap width G was 2.5 mm (the outer diameter d of the inner cylinder 70 is 45 mm, and the diameter dimension ratio d/D is 0.9), as shown in Figs. 11 and 12, the determination was "× (poor)" even though the peripheral velocity V, the axial flow velocity Fv, and the type of the reaction target fluid F were changed. The flow rate ratio Q1/Q2 was set to 1.

### [Results in case where flow rate ratio Q1/Q2 is changed]

Furthermore, the results of observing the states of the reaction phase 30 and the inhibiting phase 31 generated in each combination, in which water was used as the reaction target fluid F, the gap width G was 0.5 mm, the peripheral velocity V was changed in 10 stages between 0.8 m/s and 7.7 m/s, and the flow rate ratio Q1/Q2 was changed to seven types of 0.125, 0.25, 0.5, 1, 2, 4, and 8, will be described. The total flow rate (Q1 + Q2) of the reaction target fluid F and the non-reaction target fluid F3 to the reaction chamber 84 was set to 31.78 mL/min.

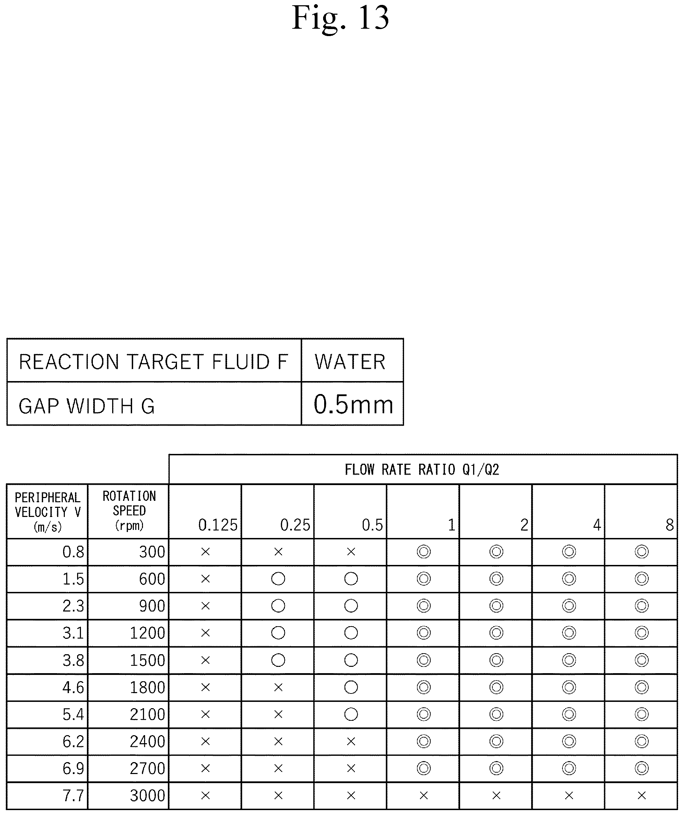

As shown in Fig. 13, in a case where the peripheral velocity V was in a range of 0.8 m/s to 6.9 m/s and the flow rate ratio Q1/Q2 was in a range of 1 to 8, the determination was "@ (best)". In addition, in a case where the peripheral velocity V was in a range of 1.5 m/s to 3.8 m/s and the flow rate ratio Q1/Q2 was 0.25 or 0.5, the determination was "o (good)". In addition, in a case where the peripheral velocity V was 4.6 m/s or 5.4 m/s and the flow rate ratio Q1/Q2 was 0.5, the determination was "o (good)". In a case where the peripheral velocity V and the flow rate ratio Q1/Q2 were a combination other than the above, the determination was "× (poor)".

From the results shown in Figs. 7 to 12, it has been found that the smaller the gap width G, the more likely the determination is to be "@ (best)". Specifically, the gap width G is preferably 1.5 mm or less, and more preferably 0.5 mm or less. A lower limit of the gap width G that can be set in the Taylor vortex reactor 10 is 0.01 mm, in consideration of heat generation of a drive unit (the motor) and the seal member in contact with the outer periphery of the inner cylinder 70, run-out accuracy of the inner cylinder 70, and the like. Consequently, the gap width G is preferably 0.01 mm or more and 1.5 mm or less, and more preferably 0.01 mm or more and 0.5 mm or less.

In addition, as shown in Fig. 8, in a case where the reaction target fluid F is a liquid obtained by adding glycerin to water, a rotation speed range of inner cylinder 70 when the gap width G is 0.5 mm and it was determined as "@ (best)" is 200 rpm (the peripheral velocity V is 0.5 m/s) to 2700 rpm (the peripheral velocity V is 6.9 m/s) . Therefore, the rotation speed of the inner cylinder 70 is preferably 200 rpm (the peripheral velocity V is 0.5 m/s) to 2700 rpm (the peripheral velocity V is 6.9 m/s). Even in a case where the gap width G is 0.01 mm, it is considered that a result determined as "@ (best)" can be obtained, similarly to the results shown in Fig. 8, by setting the rotation speed of the inner cylinder 70 from 200 rpm (the peripheral velocity V is 0.5 m/s) to 2700 rpm (the peripheral velocity V is 6.9 m/s).

In addition, as shown in Fig. 7, in a case where the reaction target fluid F is water, the rotation speed of the inner cylinder 70 is preferably 200 rpm (the peripheral velocity V is 0.5 m/s) to 900 rpm (the peripheral velocity V is 2.3 m/s), or 2400 rpm (the peripheral velocity V is 6.2 m/s) to 2700 rpm (the peripheral velocity V is 6.9 m/s). Even in a case where the gap width G is 0.01 mm, it is considered that the result determined as "⊚ (best)" can be obtained, similarly to the results shown in Fig. 7, by setting the rotation speed of the inner cylinder 70 from 200 rpm (the peripheral velocity V is 0.5 m/s) to 2700 rpm (the peripheral velocity V is 6.9 m/s).

### [Stirring force]

Here, a value obtained by dividing the peripheral velocity V by the gap width G is defined as a stirring force S. For example, in a case where the gap width G is 1.5 mm, the stirring force S when the peripheral velocity V is 1.0 m/s is, 1000 (mm/s) ÷ 1.5 (mm) ≈ 666 (s⁻¹), and the stirring force S when the peripheral velocity V is 3.4 m/s is, 3400 (mm/s) ÷ 1.5 (mm) ≈ 2266 (s⁻¹). These values of the peripheral velocity V are the lower limit value and the upper limit value of the range determined as "@ (best)" when a liquid obtained by adding glycerin to water was used as the reaction target fluid F.

In a case where the gap width G is 0.5 mm, the stirring force S when the peripheral velocity V is 0.5 m/s is, 500 (mm/s) ÷ 0.5 (mm) = 1000 (s⁻¹), and the stirring force S when the peripheral velocity V is 6.9 m/s is, 6900 (mm/s) ÷ 0.5 (mm) = 13800 (s⁻¹). These values of the peripheral velocity V are the lower limit value and upper limit value of the range determined as "⊚ (best) " when the gap width G was 0.5 mm.

Furthermore, in a case where the gap width G is 0.01 mm, the stirring force S when the peripheral velocity V is 0.5 m/s is, 500 (mm/s) ÷ 0.01 (mm) = 50,000 (s⁻¹), and the stirring force S when the peripheral velocity V is 6.9 m/s is, 6900 (mm/s) ÷ 0.01 (mm) = 690,000 (s⁻¹). As described above, the gap width G is preferably 0.01 mm or more and 1.5 mm or less. Consequently, the stirring force S is preferably 666 s⁻¹ or more and 690,000 s⁻¹ or less, with which it can be determined as "⊚ (best)".

In addition, as shown in Figs. 7, 8, and 10, it has been found that the determination tends to be "⊚ (best)" when the total flow rate (Q1 + Q2) of the reaction target fluid F and the non-reaction target fluid F3 to the reaction chamber 84 is made smaller. Specifically, the total flow rate (Q1 + Q2) of the reaction target fluid F and the non-reaction target fluid F3 to the reaction chamber 84 is preferably 180 mL/min (the axial flow velocity Fv is 38.5 mm/s) or less, and more preferably 30 mL/min (the axial flow velocity Fv is 6.4 mm/s) or less.

In addition, from the results shown in Fig. 13, it was found that the determination tends to be "@ (best)" as the flow rate ratio Q1/Q2 increases (that is, a ratio of the non-reaction target fluid F3 increases). Although not shown in Fig. 13, it is considered that the determination will be "@ (best)" even when the flow rate ratio Q1/Q2 is 9 or 10 that is larger than 8. Therefore, the flow rate ratio Q1/Q2 is preferably larger than 0.25 and 10 or less, and more preferably larger than 1 and 10 or less.

### <Functions and effects of Example>

In this fluid control method, the reaction phase 30 having a ring shape and the inhibiting phase 31 having a ring shape are generated in the reaction chamber 84 which is formed between the outer cylinder 61 and the inner cylinder 70 coaxially arranged in the outer cylinder 61. The reaction phase 30 is formed of the reaction target fluid F in which one or more Taylor vortices V1 (one set or a plurality of sets of cells C1 and C2) are generated, and the reaction phases 30 are arranged in the axis R direction. The inhibiting phase 31 is adjacent to the reaction phase 30 in the axis R direction, and inhibits the reaction target fluid F in the reaction phase 30 from flowing out to the outside of the reaction phase 30.

With this configuration, even when the reaction target fluid F attempts to diffuse from the reaction phase 30 in the axis R direction, the outflow of the reaction target fluid F from the reaction phase 30 is inhibited by the inhibiting phase 31, so that the reaction target fluid F can be inhibited from flowing out of the reaction chamber 84 before the reaction is completed. That is, by generating the inhibiting phase 31, the reaction target fluid F is confined in one reaction phase 30, which reduces unevenness in the reaction of the reaction target fluid F in the reaction phases 30 and improves the reaction rate of the reaction target fluid F. As a result, various reactions can be satisfactorily performed.

In this fluid control method, the inhibiting phase 31 is the partition phase 50 which partitions two reaction phases 30 so as to be separated in the axis R direction. With this configuration, since the reaction phases 30 adjacent to each other in the axis R direction are partitioned by the partition phase 50 so as not to be in direct contact with each other, the effect of inhibiting the diffusion of the reaction target fluid F from the reaction phase 30 in the axis R direction is high. In a case where the types of the reaction target fluids F1 and F2 in the reaction phase 30 are going to be changed (for example, in a case where F1 and F2 are going to be changed to F11 and F12), the reaction target fluids F1, F2 and F11, F12 are not unnecessarily mixed with each other, and the reaction target fluids can be switched without stopping the flow of the reaction phase 30 and the inhibiting phase 31 (that is, the gas-liquid slag flow) in the reaction chamber 84.

In this fluid control method, the partition phase 50 is made of a gas. With this configuration, it is easy to reliably partition the reaction phases 30 adjacent to each other in the axis R direction, and it is easy to separate the reaction target fluid F having completed the reaction and the non-reaction target fluid F3.

In this fluid control method, when the gap width G in the radial direction formed by the outer cylinder 61 and the inner cylinder 70 is 1.5 mm or less, it is easy to generate the reaction phase 30 and the inhibiting phase 31 such that the boundary therebetween is clear.

In this fluid control method, when the gap width G is 0.01 mm or more and 0.5 mm or less, it is easy to generate the reaction phase 30 and the inhibiting phase 31 such that the boundary therebetween is much clearer.

In this fluid control method, when the peripheral velocity V of the inner cylinder 70 is set in a range of 0.5 m/s or more and 6.9 m/s or less, it is easy to generate the reaction phase 30 and the inhibiting phase 31 such that the boundary therebetween is clear.

In this fluid control method, when the peripheral velocity V of the inner cylinder 70 is set in a range of 0.5 m/s or more and 2.3 m/s or less, or in a range of 6.2 m/s or more and 6.9 m/s or less, it is easy to generate the reaction phase 30 and the inhibiting phase 31 such that the boundary therebetween is much clearer.

In this fluid control method, when a value obtained by dividing the peripheral velocity V of the inner cylinder 70 by the gap width G is defined as the stirring force S, stirring can be satisfactorily performed in the reaction phase 30 when the stirring force S is 666 s⁻¹ or more and 690,000 s⁻¹ or less.

In this fluid control method, the inhibiting phase 31 is formed by using the non-reaction target fluid F3 different from the reaction target fluid F, and when the flow rate of the non-reaction target fluid F3 to the reaction chamber 84 is Q1 and the flow rate of the reaction target fluid F to the reaction chamber 84 is Q2, the flow rate ratio Q1/Q2 is set to be larger than 0.25 and 10 or less. With this configuration, it is easy to generate the reaction phase 30 and the inhibiting phase 31 such that the boundary therebetween is much clearer.

In this fluid control method, the reaction target fluid F are a liquid, the non-reaction target fluid F3 is a gas, and when the flow rate ratio Q1/Q2 is set to be larger than 1 and 10 or less, it is easy to make the boundary still clearer.

In this fluid control method, when the flow velocity of the reaction target fluid F1 and the non-reaction target fluid F3 different from the reaction target fluid F1 in the axial direction of the inner cylinder 70 is set to 38.5 mm/s or less, it is easy to make the boundary clear.

In this fluid control method, when the flow velocity is set to 6.4 mm/s or less, it is easy to make the boundary much clearer.

The Taylor vortex reactor 10 includes the outer cylinder 61, the inner cylinder 70, the reaction target fluid supply device 87, the heterophasic fluid supply device 88, and the detection device 86. The inner cylinder 70 is coaxially disposed in the outer cylinder 61 and rotationally driven around the axis R to form the reaction chamber 84 between the inner cylinder 70 and the outer cylinder 61. The reaction target fluid supply device 87 supplies, to the reaction chamber 84, the reaction target fluid F which generate the reaction phase. The heterophasic fluid supply device 88 supplies, to the reaction chamber 84, the non-reaction target fluid F3 (the heterophasic fluid) which generates the inhibiting phase 31 (non-reaction phases) different from the reaction phase 30. The detection device 86 detects whether the reaction phase 30 having a ring shape and the inhibiting phase 31 having a ring shape and containing the non-reaction target fluid F3 are generated adjacent to each other in the axis R direction in the reaction chamber 84.

With this configuration, the generation situations of the reaction phase 30 and the inhibiting phase 31 can be grasped by the detection device 86.

### <Other examples>

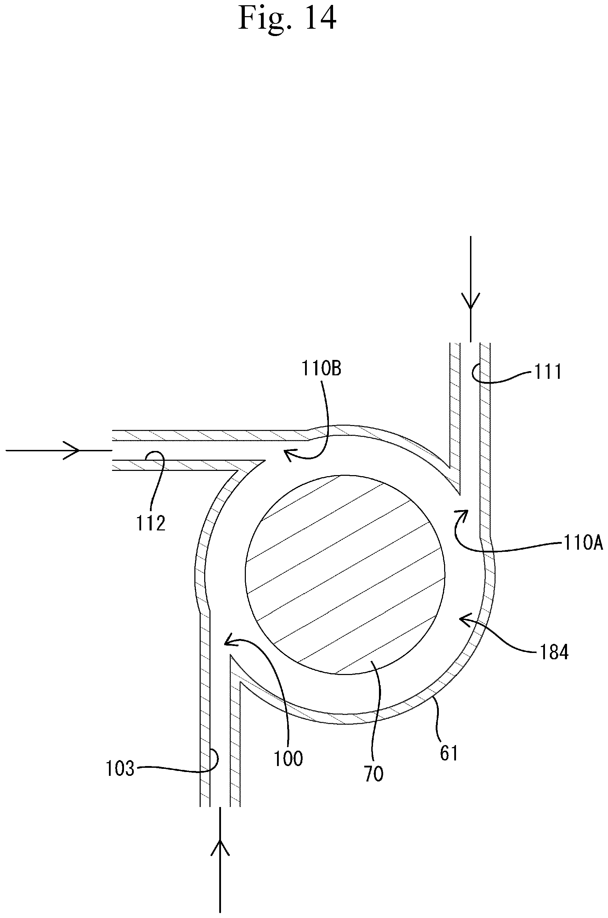

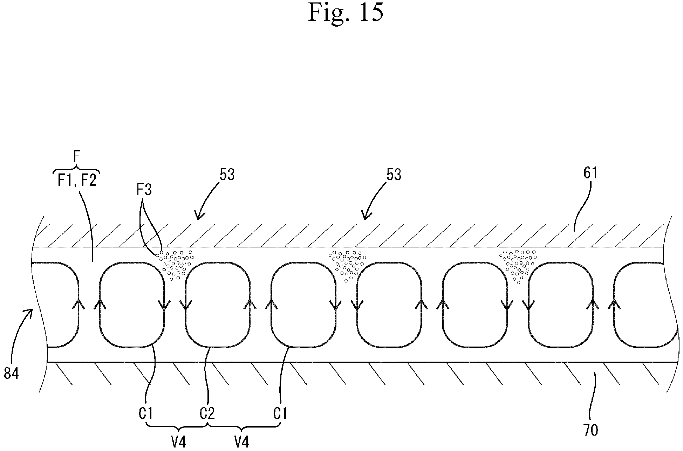

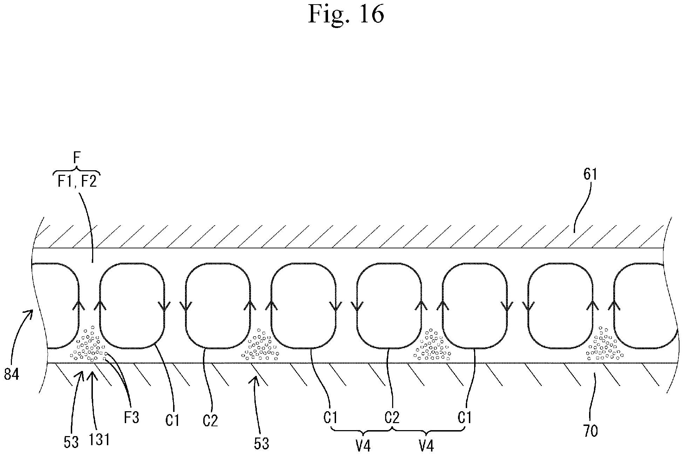

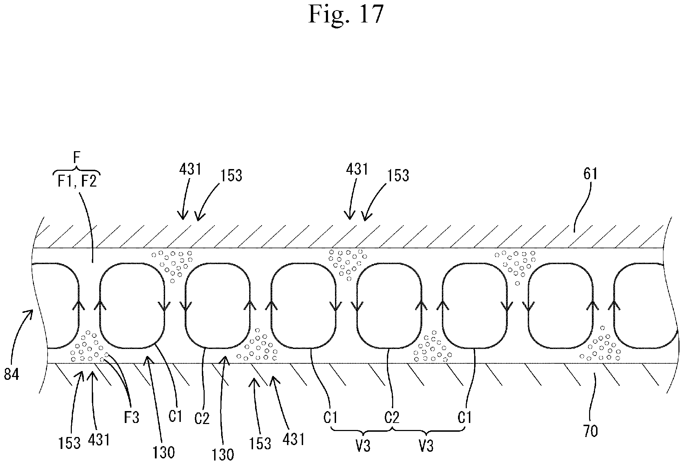

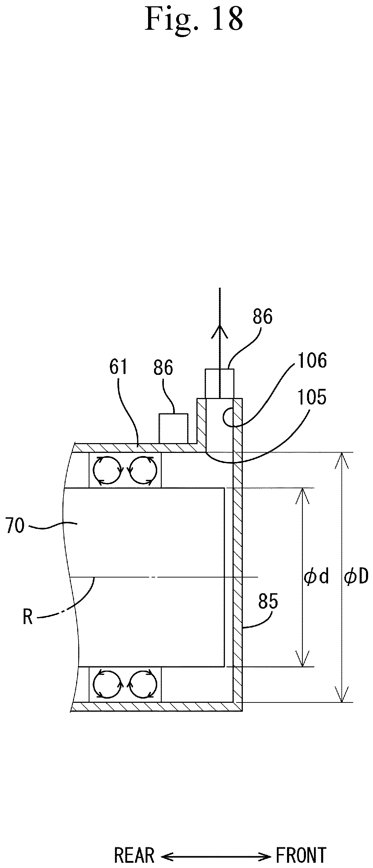

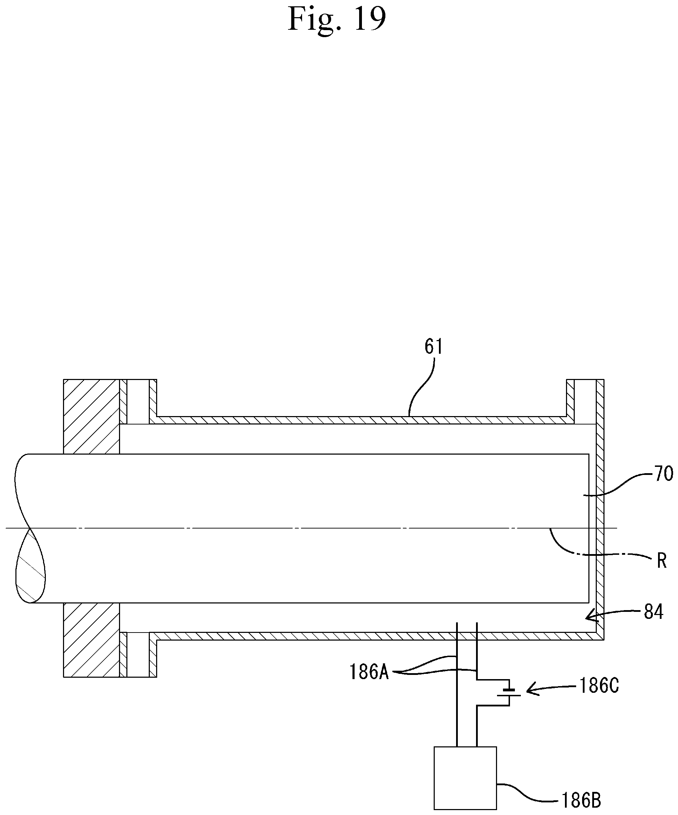

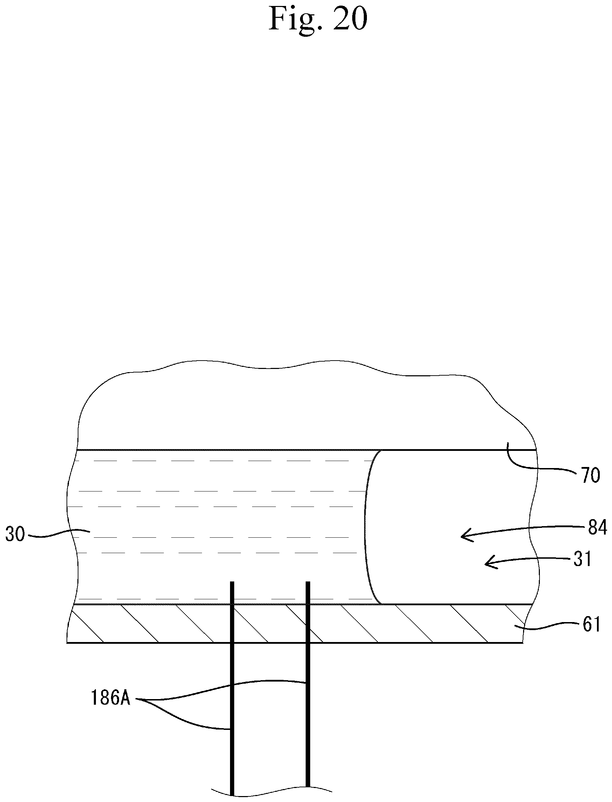

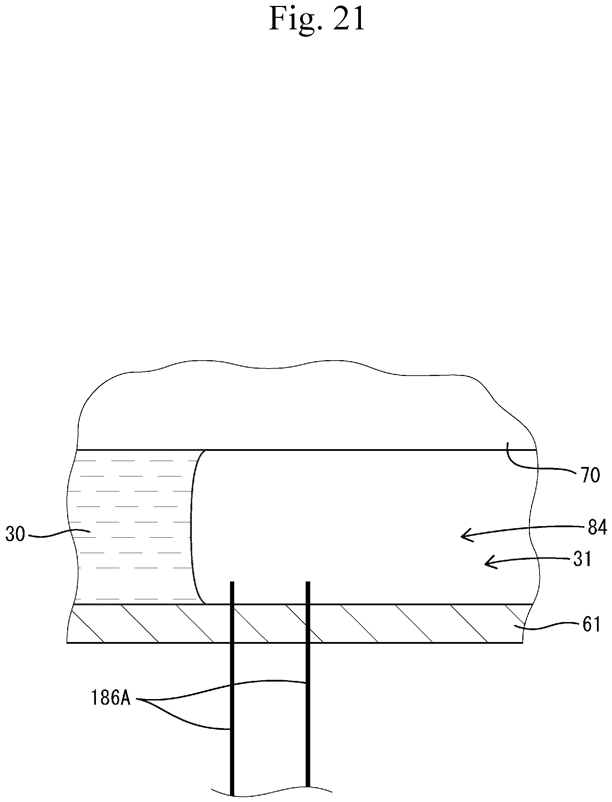

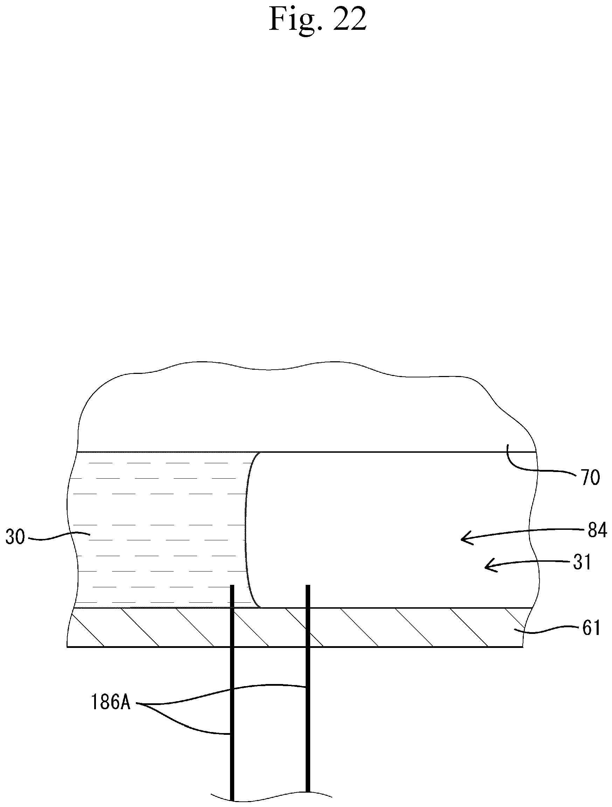

The present invention is not limited to the examples described with reference to the above description and drawings, and can be realized by various configurations without departing from the gist thereof. For example, various features of the examples described above and the examples to be described below may be combined in any way as long as they do not depart from the gist of the invention and do not contradict each other. In addition, if the technical features are not described as essential in the present description, they can be deleted as appropriate.
(1) In the above Example 1, the reaction target fluid and the non-reaction target fluid are caused to continuously flow into the reaction chamber, but the present invention is not limited thereto. Either one of the reaction target fluid and the non-reaction target fluid may be caused to continuously flow into the reaction chamber and the other may be caused to intermittently flow into the reaction chamber by the control device. In this case, since the flow rate ratio Q1/Q2 can be adjusted only by adjusting an inflow amount of only one of the two, the control is simple. For example, in a state where the non-reaction target fluid is caused to flow in and the inner cylinder is rotationally driven, the reaction target fluid is caused to flow into the reaction chamber, and thereafter, the non-reaction target fluid is caused to flow into the reaction chamber again. In this way, a Taylor vortex of the reaction target fluid is generated in a central portion of the reaction chamber in the front-rear direction, and the various reactions can be generated therein. This makes it possible to cause an extremely small amount of the reaction target fluid to generate the various reactions. In this way, it is possible to avoid using the reaction target fluid more than necessary, and wasteful consumption of the reaction target fluid can be avoided.
(2) The above Example 1 has a configuration in which the respective reaction target fluids passing through the first inflow path and the second inflow path are merged upstream of the one of the inlets and then allowed to flow into the reaction chamber, but the present invention is not limited thereto. As shown in Fig. 14, each reaction target fluid passing through the first inflow path 111 and the second inflow path 112 may be caused to flow into the reaction chamber 184 from separate inlets 110A and 110B.
(3) In the above Example 1, two types of reaction target fluids are caused to flow into the reaction chamber through the first inflow path and the second inflow path, but the present invention is not limited thereto. One type of reaction target fluid may be caused to flow into the reaction chamber, or three or more types of reaction target fluids may be caused to flow into the reaction chamber by providing three or more inflow paths. In addition, the inflow paths are provided on the same cross-section in the above Example 1, but the present invention is not limited thereto. The inflow paths may be provided to be separated in the axial direction.
(4) In the above Example 1, the detection device is provided in the closing member, but the present invention is not limited thereto. As shown in Fig. 18, the detection device 86 may be provided on the outer peripheral surface of the outer cylinder 61 or the outflow path 106.
(5) Unlike the above Example 1 described above, as shown in Fig. 17, a bubble phase 153 which contains bubbles larger than 100 um may be generated as an inhibiting phase 431 in the valley region between adjacent cells C1 and C2 constituting adjacent Taylor vortices V3. With this configuration, since the bubble phases 153 are interspersed in the valley regions generated between the cells C1 and C2, it is possible to obtain an effect of inhibiting forward and backward movement of the reaction target fluid F between the reaction phases 130 while further reducing the required amount of the non-reaction target fluid F3. In addition, as compared with a case of generating the slag flow, since the amount of the fluid required as the inhibiting phase is further reduced, the amount of the reaction target fluid F in the reaction chamber 84 can be increased accordingly, which leads to an increase in a treatment amount of the reaction target fluid F. The bubbles may be only fine bubbles or may be only ultrafine bubbles.
(6) In Example 1, gas is used as the non-reaction target fluid, but the present invention is not limited thereto. A liquid such as oil may be used as the non-reaction target fluid as long as the liquid is incompatible with the reaction target fluid. In this case, the slag flow is formed of two liquids.
(7) In Example 1, the detection device is used to detect the reaction phase and the inhibiting phase located at the front end portion of the reaction chamber, but the present invention is not limited thereto. The closing member may be formed of a transparent member, and the state of the front end portion of the reaction chamber may be visually observed.
(8) Example 1 discloses a configuration in which the microbubble phases are in contact with both circumferential surfaces of the outer peripheral surface of the inner cylinder and the inner peripheral surface of the outer cylinder, but the present invention is not limited thereto. As shown in Figs. 15 and 16, the microbubble phases 53 may be generated so as to be in contact with only the valley region on the outer cylinder 61 side between the adjacent cells C1 and C2 constituting Taylor vortices V4, or the microbubble phases 53 may be generated so as to be in contact with only the valley region on the inner cylinder 70 side. In this case, it is conceivable to adjust distribution position and density of the microbubble phases 53 and a particle size of the microbubbles by appropriately adjusting the rotation speed of the inner cylinder 70.
(9) In Example 1, a transparent acrylic resin is used as the outer cylinder, but the material of the outer cylinder may be glass. In addition, the outer cylinder may be formed by covering the outer peripheral surface of transparent acrylic resin or glass with a metal cylinder. In this case, it is preferable to provide a slit extending in the axial direction in the metal cylinder so that the state in the reaction chamber can be visually observed. Alternatively, the metal cylinder may be used as the outer cylinder.
(10) Unlike Example 1, a plurality of detection devices may be provided around the axis of the closing member. With this configuration, it is possible to detect fluctuation around the axis at an interface between the reaction phase and the inhibiting phase.
(11) The dimensions of the reaction chamber in the front-rear direction, the inner diameter of the outer cylinder, and the outer diameter of the inner cylinder are not limited to the dimensions disclosed in the examples.
(12) Bubbles may be generated by a gas obtained by mixing a gas having compatibility with the reaction target fluid and a gas having incompatibility with the reaction target fluid.
(13) Even in a case where a slag flow in which the reaction phase is generated with an aqueous liquid and the inhibiting phase is generated with an oily liquid (that is, a liquid-liquid slag flow) is formed, the reaction phase and the inhibiting phase can be generated such that the boundary therebetween is clear, by setting the flow rate ratio Q1/Q2 to 0.25 or more and 10 or less.
(14) Unlike Example 1, the reaction target fluid may be a combination of liquid and particulate matter, or a combination of liquid and gas.
(15) Unlike Example 1, two or more Taylor vortices may be generated in one reaction phase. In addition, in one reaction phase, one cell and the other cell may be replaced in the front-rear direction.
(16) The configuration of the detection device may be as shown in Fig. 19. Specifically, a pair of electrode rods 186A is attached to the outer cylinder 61 in a penetrating manner so as to be separated from each other in the axis R direction. The distal end portions of the electrode rods 186A face the reaction chamber 84. A power supply 186C is provided to be interposed in one electrode rod 186A. A relay switch 186B is connected to proximal end portions of the pair of electrode rods 186A. For example, in a case where both distal end portions of the pair of electrode rods 186A are in contact with the one reaction phase 30 having a property that allows a current to flow, electricity is supplied between the pair of electrode rods 186A, so that the relay switch 186B is switched to an on state (see Fig. 20). On the other hand, in a case where at least one of the distal end portions of the pair of electrode rods 186A is in contact with the inhibiting phase 31 having a property that does not allow a current to flow (that is, nonconductive), electricity is not supplied between the pair of electrode rods 186A, and the relay switch 186B is held in an off state (see Figs. 21 and 22).
(17) Unlike Example 1, the inner cylinder may be fixed and only the outer cylinder may be rotated, or both the inner cylinder and the outer cylinder may be rotated such that the inner cylinder rotates relative to the outer cylinder.

### REFERENCE SIGNS LIST

10 Taylor vortex reactor
30, 130 reaction phase
31, 331, 431 inhibiting phase
50 partition phase
53 microbubble phase
61 outer cylinder
70 inner cylinder
84, 184 reaction chamber
86 detection device
87 reaction target fluid supply device
88 heterophasic fluid supply device
153 bubble phase
B bubble
D inner diameter of outer cylinder
d outer diameter of inner cylinder
F, F1, F2 reaction target fluid
F3 non-reaction target fluid (heterophasic fluid)
Fv axial flow velocity
G gap width
Q1, Q2 flow rate
R axis
S stirring force
V peripheral velocity of inner cylinder
V1, V2, V3, V4 Taylor vortex

## Claims

1. A fluid control method comprising, generating:
in a reaction chamber formed between an outer cylinder and an inner cylinder coaxially disposed in the outer cylinder,
a reaction phase having a ring shape, formed of a reaction target fluid in which a Taylor vortex is generated, the reaction phases being arranged in an axial direction; and
an inhibiting phase having a ring shape that is adjacent to the reaction phase in the axial direction and inhibits the reaction target fluid in the reaction phase flowing out to an outside of the reaction phase.

2. The fluid control method according to claim 1, wherein the inhibiting phase is a partition phase that partitions the two reaction phases so as to be separated in the axial direction.

3. The fluid control method according to claim 2, wherein the partition phase is made of a gas.

4. The fluid control method according to claim 2 or 3, wherein a gap width G formed by the outer cylinder and the inner cylinder is 0.01 mm or more and 1.5 mm or less.

5. The fluid control method according to claim 4, wherein the gap width G is 0.01 mm or more and 0.5 mm or less.

6. The fluid control method according to claim 5, wherein a peripheral velocity V of the inner cylinder is set in a range of 0.5 m/s or more and 6.9 m/s or less.

7. The fluid control method according to claim 5, wherein the peripheral velocity V of the inner cylinder is set in a range of 0.5 m/s or more and 2.3 m/s or less, or in a range of 6.2 m/s or more and 6.9 m/s or less.

8. The fluid control method according to claim 4, wherein when a value obtained by dividing the peripheral velocity V of the inner cylinder by the gap width G is defined as a stirring force S, the stirring force S is 666 s⁻¹ or more and 690000 s⁻¹ or less.

9. The fluid control method according to claim 5, wherein
the inhibiting phase is formed by using a non-reaction target fluid different from the reaction target fluid, and
when a flow rate of the non-reaction target fluid to the reaction chamber is Q1 and a flow rate of the reaction target fluid to the reaction chamber is Q2,
a flow rate ratio Q1/Q2 is larger than 0.25 and 10 or less.

10. The fluid control method according to claim 9, wherein the reaction target fluid is a liquid, the non-reaction target fluid is a gas, and the flow rate ratio Q1/Q2 is larger than 1 and 10 or less.

11. The fluid control method according to claim 4, wherein a flow velocity of the reaction target fluid and the non-reaction target fluid different from the reaction target fluid in the axial direction of the inner cylinder are set to 38.5 mm/s or less.

12. The fluid control method according to claim 11, wherein the flow velocity is set to 6.4 mm/s or less.

13. The fluid control method according to claim 1, wherein a bubble phase including bubbles as the inhibiting phase is generated between a valley of the adjacent Taylor vortices.

14. A Taylor vortex reactor comprising:
an outer cylinder;
an inner cylinder that is coaxially disposed in the outer cylinder, is rotationally driven around an axis, and forms a reaction chamber between the inner cylinder and the outer cylinder;
a reaction target fluid supply device that supplies, to the reaction chamber, a reaction target fluid that generates a reaction phase;
a heterophasic fluid supply device that supplies, to the reaction chamber, a heterophasic fluid that generates a non-reaction phase different from the reaction phase; and
a detection device that detects whether the reaction phase having a ring shape and the non-reaction phase containing the heterophasic fluid and having a ring shape are generated adjacent to each other in the axial direction in the reaction chamber.
